(19) Europäisches Patentamt
European Patent Office
Office européen des brevets

(11) **EP 2 317 090 B1**

(12) **EUROPEAN PATENT SPECIFICATION**

(45) Date of publication and mention
of the grant of the patent:
**22.05.2013  Bulletin 2013/21**

(51) Int Cl.:
***F01N 3/20*** *(2006.01)*      ***F01N 9/00*** *(2006.01)*

(21) Application number: **11151492.3**

(22) Date of filing: **23.09.2009**

(54) **Method for operating exhaust gas treatment system**

Betriebsverfahren für ein Abgasbehandlungssystem

Procédé de fonctionnement d'un système de traitement des gaz d'échappement

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.10.2008  US 108172 P**
**04.12.2008  US 327958**

(43) Date of publication of application:
**04.05.2011  Bulletin 2011/18**

(62) Document number(s) of the earlier application(s) in accordance with Art. 76 EPC:
**09171096.2 / 2 187 009**

(73) Proprietor: **Delphi Technologies, Inc.**
**Troy, MI 48007 (US)**

(72) Inventors:
• **Wu, Ming-Cheng**
**Troy, MI 48098 (US)**
• **Herman, Andrew D.**
**Grand Blanc, MI 48439 (US)**
• **Shost, Mark Anthony**
**Northville, MI 48168-4437 (US)**

(74) Representative: **Robert, Vincent**
**Delphi France SAS**
**Bât. le Raspail - ZAC Paris Nord 2**
**22, avenue des Nations**
**CS 65059 Villepinte**
**95972 Roissy CDG Cedex (FR)**

(56) References cited:
**US-A1- 2006 130 461      US-A1- 2007 125 071**

**Description**

TECHNICAL FIELD

The present invention relates generally to an exhaust gas treatment system for use with an internal combustion engine where the exhaust treatment system is of the type using a selective catalytic reduction (SCR) catalyst and methods for operating the same.

BACKGROUND OF THE INVENTION

The relevant background includes the fields of exhaust gas treatment systems and diagnostics therefore. As to the former field of endeavor, there have been a variety of exhaust gas treatment systems developed in the art to minimize emission of undesirable constituent components of engine exhaust gas. It is known to reduce NOx emissions using a SCR catalyst, treatment device that includes a catalyst and a system that is operable to inject material such as ammonia ($NH_3$) into the exhaust gas feedstream ahead of the catalyst. The SCR catalyst is constructed so as to promote the reduction of NOx by $NH_3$ (or other reductant, such as aqueous urea which undergoes decomposition in the exhaust to produce $NH_3$). $NH_3$ or urea selectively combine with NOx to form $N_2$ and $H_2O$ in the presence of the SCR catalyst, as described in US2006/0130461 and generally in U.S. Patent Publication 2007/0271908 entitled "ENGINE EXHAUST EMISSION CONTROL SYSTEM PROVIDING ON-BOARD AMMONIA GENERATION". For diesel engines, for example, selective catalytic reduction (SCR) of NOx with ammonia is perhaps the most selective and active reaction for the removal of NOx in the presence of excess oxygen. The $NH_3$ source must be periodically replenished and the injection of $NH_3$ into the SCR catalyst requires precise control. Over injection may cause a release of $NH_3$ ("slip") out of the tailpipe into the atmosphere, while under injection may result in inadequate emissions reduction (*i.e.*, inadequate NOx conversion to $N_2$ and $H_2O$).

These systems have been amply demonstrated in the stationary catalytic applications. For mobile applications where it is generally not possible (or at least not desirable) to use ammonia directly, urea-water solutions have been proven to be suitable sources of ammonia in the exhaust gas stream. This has made SCR possible for a wide range of vehicle applications.

Increasingly stringent demands for low tail pipe emissions of NOx have been placed on heavy duty diesel powered vehicles. Liquid urea dosing systems with selective catalytic NOx reduction (SCR) technologies have been developed in the art that provide potentially viable solutions for meeting current and future diesel NOx emission standards around the world. Ammonia emissions may also be set by regulation or simply as a matter of quality. For example, European emission standards (*e.g.*, EU 6) for $NH_3$ slip targets specify 10 ppm average and 30 ppm peak. However, the challenge described above remains, namely, that such treatment systems achieve maximum NOx reduction (*i.e.*, at least meeting NOx emissions criteria) while at the same time maintaining acceptable $NH_3$ emissions, particularly over the service life of the treatment system.

In addition to the substantive emissions standards described above, vehicle-based engine and emission systems typically also require various self-monitoring diagnostics to ensure tailpipe emissions compliance. In this regards, U.S. federal and state on-board diagnostic regulations (*e.g.*, OBDII) require that certain emission-related systems on the vehicle be monitored, and that a vehicle operator be notified if the system is not functioning in a predetermined manner. Automotive vehicle electronics therefore typically include a programmed diagnostic data manager or the like service configured to receive reports from diagnostic algorithms/circuits concerning the operational status of various components or systems and to set/reset various standardized diagnostic trouble codes (DTC) and/or otherwise generate an alert (*e.g.*, MIL). The intent of such diagnostics is to inform the operator when performance of a component and/or system has degraded to a level where emissions performance may be affected and to provide information (*e.g.*, via the DTC) to facilitate remediation.

Over the service life of the above-described exhaust treatment systems, various constituent components can wear, degrade or the like, possibly impairing overall performance. For example, degradation of either the SCR catalyst or the dosing system may impair the treatment system in meeting either or both of the NOx and $NH_3$ emission standards. Open loop control does not appear to provide an adequate solution. It would be advantageous to provide diagnostic routines to detect any such degradation.

There is therefore a need for diagnostic methods that minimize or eliminate one or more of the problems set forth above.

SUMMARY OF THE INVENTION

The invention provides an advantage for exhaust gas treatment systems that use ammonia or other reductant (*e.g.*, aqueous urea solution) injection in combination with an SCR catalyst for NOx removal from the engine exhaust gas. More specifically, the invention allows for an increased default dosing rate for normal operation, particularly at lower temperatures (*e.g.*, below 300 °C), for maximal NOx conversion under certain driving conditions, without significant risk of high ammonia concentration slips when the temperature increases. This is because the control features of the invention are configured to recognize when possible ammonia slips are likely and reduce the dosing in advance.

In one aspect of the invention, a method of operating the exhaust treatment system is provided where predetermined dosing rates are dynamically reduced when certain exhaust transients are detected. The method involves a number of steps. The first step involves dosing reductant (*e.g.*, $NH_3$ or aqueous urea) into the exhaust gas stream in an amount based on predetermined surface coverage parameter theta values ("target $\theta_{NH3}$"). In one embodiment, the target theta values are selected based on exhaust temperature. The next step involves decreasing the dosing when at least one of a plurality of transient compensation trigger conditions are satisfied. The amount of the dosing decrease is configured to mitigate or prevent the occurrence of an unacceptably high ammonia slip. The first trigger condition is when a rate of change of an exhaust mass air flow exceeds a first predetermined threshold. The logic for this condition is that a sudden increase in the exhaust mass air flow portends a near-term increase in the exhaust temperature. The near-term increase in exhaust temperature, in turn, can lead to rapid $NH_3$ desorption, resulting in perhaps a high concentration $NH_3$ slip. The second trigger condition is when an exhaust gas temperature gradient is in an increasing state. In one embodiment, this is satisfied when the gradient exceeds a predetermined level (*e.g.*, 0.5 - 0.6 °C/second). The logic for this condition is that rapid temperature increases can also lead to $NH_3$ desorption, and thus $NH_3$ slips.

In a second aspect of the invention, a method of $NH_3$ slip control is provided. The slip control feature, in one embodiments, shuts-off dosing when certain exhaust conditions are detected, thereby mitigating an ammonia slip. The method includes a number of steps. The first step involves dosing reductant (*e.g.*, $NH_3$, aqueous urea) into the exhaust gas stream. Next, establishing an ammonia slip trip level based on the exhaust temperature. Finally, decreasing (perhaps significantly), and preferably, discontinuing, the dosing step when an ammonia concentration level, measured at the SCR catalyst (*e.g.*, mid-brick position) exceeds the ammonia slip trip level, provided that the exhaust temperature gradient is in an increasing state. The combination of conditions indicate the risk of an unacceptably high $NH_3$ slip and warrant shutting-off dosing until the conditions subside.

An exhaust gas treatment system is also presented.

BRIEF DESCRIPTION OF THE DRAWINGS

The present invention will now be described by way of example, with reference to the accompanying drawings:

Figure 1 is a diagrammatic and block diagram showing an exhaust treatment system in which the control methods of the invention may be practiced.

Figure 2 is a block diagram showing an overview of the dosing control that includes an SCR model as well as improved control features.

Figure 3 is a signal flow mechanization schematic showing inputs and outputs of the SCR model.

Figure 4 is a simplified diagram showing typical target theta ($\theta$) values or curves as a function of temperature.

Figure 5 is flowchart showing a method for controlling an exhaust treatment system involving exhaust transient compensation.

Figure 6 is a timing diagram illustrating exhaust mass air flow transient detection.

Figure 7 is a timing diagram illustrating exhaust gas temperature gradient state detection as well as forward temperature estimation.

Figure 8 is a flowchart of a method for controlling an exhaust treatment system involving ammonia (NH3) slip control.

Figure 9 is a timing diagram showing recognition of certain exhaust conditions to activate NH3 slip control.

Figure 10 is a timing diagram showing NOx removal and exhaust temperature.

Figure 11 is a timing diagram showing the respective outputs of mid-brick positioned and post-SCR catalyst positioned ammonia sensors.

DESCRIPTION OF THE PREFERRED EMBODIMENT

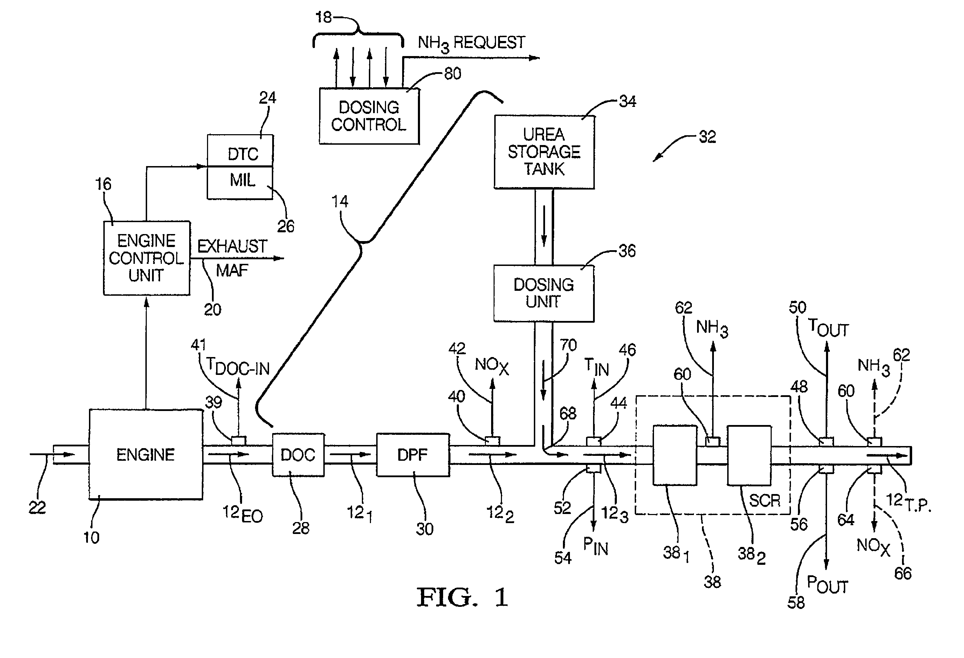

Referring now to the drawings wherein like reference numerals are used to identify identical components in the various views, Figure 1 is a diagrammatic and block diagram showing an exemplary diesel cycle internal combustion engine 10 whose combustion exhaust gas 12 is fed to an exhaust gas treatment system 14. The exhaust gas is represented as a stream flowing through the exhaust gas treatment system 14 and is shown as a series of arrows designated $12_{EO}$ (engine out), $12_1$, $12_2$, $12_3$ and $12_{TP}$ (tail pipe). It should be understood that while the invention will be described in connection with an automotive vehicle (*i.e.*, mobile) embodiment, the invention may find useful application in stationary applications as well. In addition, embodiments of the invention may be used in heavy-duty applications (*e.g.*, highway tractors, trucks and the like) as well as light-duty applications (*e.g.*, passenger cars). Moreover, embodiments of the invention may find further useful application in various types of internal combustion engines, such as compression-ignition (*e.g.*, diesel) engines as well as spark-ignition engines.

In the illustrative embodiment, the engine 10 may be a turbocharged diesel engine. In a constructed embodiment, the engine 10 comprised a conventional 6.6-liter, 8-cylinder turbocharged diesel engine commercially available under the DuraMax trade designation. It should be understood this is exemplary only.

Figure 1 also shows an engine control unit (ECU) 16 configured to control the operation of the engine 10. The ECU 16 may comprise conventional apparatus known generally in the art for such purpose. Generally, the ECU 16 may include at least one microprocessor or other processing unit, associated memory devices such as read only memory (ROM) and random access memory (RAM), a timing clock, input devices for monitoring input from external analog and digital devices and controlling output devices. The ECU 16 is operable to monitor engine operating conditions and other inputs (*e.g.*, operator inputs) using the plurality of sensors and input mechanisms, and control engine operations with the plurality of output systems and actuators, using pre-established algorithms and calibrations that integrate information from monitored conditions and inputs. It should be understood that many of the conventional sensors employed in an engine system have been omitted for clarity. The ECU 16 may be configured to calculate an exhaust mass air flow (MAF) parameter 20 indicative of the mass air flow exiting engine 10.

The software algorithms and calibrations which are executed in the ECU 16 may generally comprise conventional strategies known to those of ordinary skill in the art. Overall, in response to the various inputs, the ECU 16 develops the necessary outputs to control the throttle valve position, fueling (fuel injector opening, duration and closing), spark (ignition timing) and other aspects, all as known in the art.

In addition to the control of the engine 10, the ECU 16 is also typically configured to perform various diagnostics. For this purpose, the ECU 16 may be configured to include a diagnostic data manager or the like, a higher level service arranged to manage the reports received from various lower level diagnostic routines/circuits, and set or reset diagnostic trouble code(s)/service codes, as well as activate or extinguish various alerts, all as known generally in the art. For example only, such a diagnostic data manager may be pre-configured such that certain non-continuous monitoring diagnostics require that such diagnostic fail twice before a diagnostic trouble code (DTC) is set and a malfunction indicator lamp (MIL) is illuminated. As shown in Figure 1, the ECU 16 may be configured to set a corresponding diagnostic trouble code (DTC) 24 and/or generate an operator alert, such an illumination of a MIL 26. Although not shown, in one embodiment, the ECU 16 may be configured so as to allow interrogation (*e.g.*, by a skilled technician) for retrieval of such set DTCs. Generally, the process of storing diagnostic trouble codes and subsequent interrogation and retrieval is well known to one skilled in the art and will not be described in any further detailed.

With continued reference to Figure 1, the exhaust gas treatment system 14 may include a diesel oxidation catalyst (DOC) 28, a diesel particulate filter (DPF) 30, a dosing subsystem 32 including at least (i) a reductant (*e.g.*, urea-water solution) storage tank 34 and (ii) a dosing unit 36, and a selective catalytic reduction (SCR) catalyst 38. In addition, Figure 1 shows various sensors disposed in and/or used by the treatment system 14. These include a DOC inlet temperature sensor 39 configured to generate a DOC inlet temperature signal 41 ($TD_{OC-IN}$), a NOx sensor 40 configured to generate a NOx signal 42 (NOx) indicative of a sensed NOx concentration, a first exhaust gas temperature sensor 44, located at the inlet of the SCR catalyst 38, configured to generate a first temperature signal 46 ($T_{IN}$), an optional second exhaust gas temperature sensor 48 configured to generate a second temperature signal 50 ($T_{OUT}$), a first pressure sensor 52 configured to generate a first pressure signal 54 ($P_{IN}$), a second pressure sensor 56 configured to generate a second pressure signal 58 ($P_{OUT}$), and an ammonia ($NH_3$) concentration sensor 60 configured to generate an ammonia concentration signal 62 indicative of the sensed $NH_3$ concentration. In many commercial vehicles, a NOx sensor 64 is provided for generating a second NOx signal 66 indicative of the NOx concentration exiting the tail pipe. However, such is shown for completeness only.

The DOC 28 and the DPF 30 may comprise conventional components to perform their known functions.

The dosing subsystem 32 is responsive to an $NH_3$ Request signal produced by a dosing control 80 and configured to deliver a NOx reducing agent at an injection node 68, which is introduced in the exhaust gas stream in accurate, controlled doses 70 (*e.g.*, mass per unit time). The reducing agent ("reductant") may be, in general, (1) $NH_3$ gas or (2) a urea-water solution containing a predetermined known concentration of urea. The dosing unit 32 is shown in block form for clarity and may comprise a number of sub-parts, including but not limited to a fluid delivery mechanism, which may include an integral pump or other source of pressurized transport of the urea-water solution from the storage tank, a fluid regulation mechanism, such as an electronically controlled injector, nozzle or the like (at node 68), and a programmed dosing control unit. The dosing subsystem 32 may take various forms known in the art and may comprise commercially available components.

The SCR catalyst 38 is configured to provide a mechanism to promote a selective reduction reaction between NOx, on the one hand, and a reductant such as ammonia gas $NH_3$ (or aqueous urea, which decomposes into ammonia, $NH_3$) on the other hand. The result of such a selective reduction is, as described above in the Background, $N_2$ and $H_2O$. In general, the chemistry involved is well documented in the literature, well understood to those of ordinary skill in the art, and thus will not be elaborated upon in any greater detail. In one embodiment, the SCR catalyst 38 may comprise copper zeolite (Cu-zeolite) material, although other materials are known. See, for example, U.S. Patent No. 6,576,587 entitled "HIGH SURFACE AREA LEAN NOx CATALYST" issued to Labarge et al., and U.S. Patent No. 7,240,484 entitled "EXHAUST TREATMENT SYSTEMS AND METHODS FOR USING THE SAME" issued to Li et al., both owned by the common assignee of the present invention, and both hereby incorporated by reference in their entirety. In addition, as shown, the SCR catalyst 38 may be of multi-brick construction, including a plurality of individual bricks $38_1$, $38_2$ wherein each "brick" may be substantially disc-shaped. The "bricks" may be housed in a suitable enclosure, as known.

The NOx concentration sensor 40 is located upstream of the injection node 68. The NOx sensor 40 is so located so as to avoid possible interference in the NOx sensing function due to the presence of $NH_3$ gas. The NOx sensor 40, however, may alternatively be located further upstream, between the DOC 28 and the DPF 30, or upstream of the DOC 28. In addition, the exhaust temperature is often referred to herein, and for such purpose, the temperature reading from the SCR inlet temperature sensor 44 ($T_{IN}$) may be used.

The $NH_3$ sensor 60 may be located, in certain embodiments, at a mid-brick position, as shown in solid line (*i.e.*, located anywhere downstream of the inlet of the SCR catalyst 38 and upstream of the outlet of the SCR catalyst 38). As illustrated, the $NH_3$ sensor 60 may be located at approximately the center position. The mid-brick positioning is significant. The sensed ammonia concentration level in this arrangement, even during nominal operation, is at a small yet detectable level of mid-brick $NH_3$ slip, where the downstream NOx conversion with this detectable $NH_3$ can be assumed in the presence of the rear brick, even further reducing $NH_3$ concentration levels at the tail pipe to within acceptable levels. Alternatively, in certain embodiments, the $NH_3$ sensor 60 may be located at the outlet of the SCR catalyst 38. The remainder of the sensors shown in Figure 1 may comprise conventional components and be configured to perform in a conventional manner known to those of ordinary skill in the art.

The dosing control 80 is configured to generate the $NH_3$ Request signal that is sent to the dosing unit 36, which represents the command for a specified amount (*e.g.*, mass rate) of reductant to be delivered to the exhaust gas stream. The dosing control 80 includes a plurality of inputs and outputs, designated 18, for interface with various sensors, other control units, etc., as described herein. Although the dosing control 80 is shown as a separate block, it should be understood that depending on the particular arrangement, the functionality of the dosing control 80 may be implemented in a separate controller, incorporated into the ECU 16, or incorporated, in whole or in part, in other control units already existing in the system (*e.g.*, the dosing unit). Further, the dosing control 80 may be configured to perform not only control functions described herein but perform the various diagnostics also described herein as well. For such purpose, the dosing control 80 may include conventional processing apparatus known in the art, capable of executing pre-programmed instructions stored in an associated memory, all performing in accordance with the functionality described herein. That is, it is contemplated that the control and diagnostic processes described herein will be programmed in a preferred embodiment, with the resulting software code being stored in the associated memory. Implementation of the invention, in software, in view of the foregoing enabling description, would require no more than routine application of programming skills by one of ordinary skill in the art. Such a control may further be of the type having both ROM, RAM, a combination of non-volatile and volatile (modifiable) memory so that the software can be stored and yet allow storage and processing of dynamically produced data and/or signals.

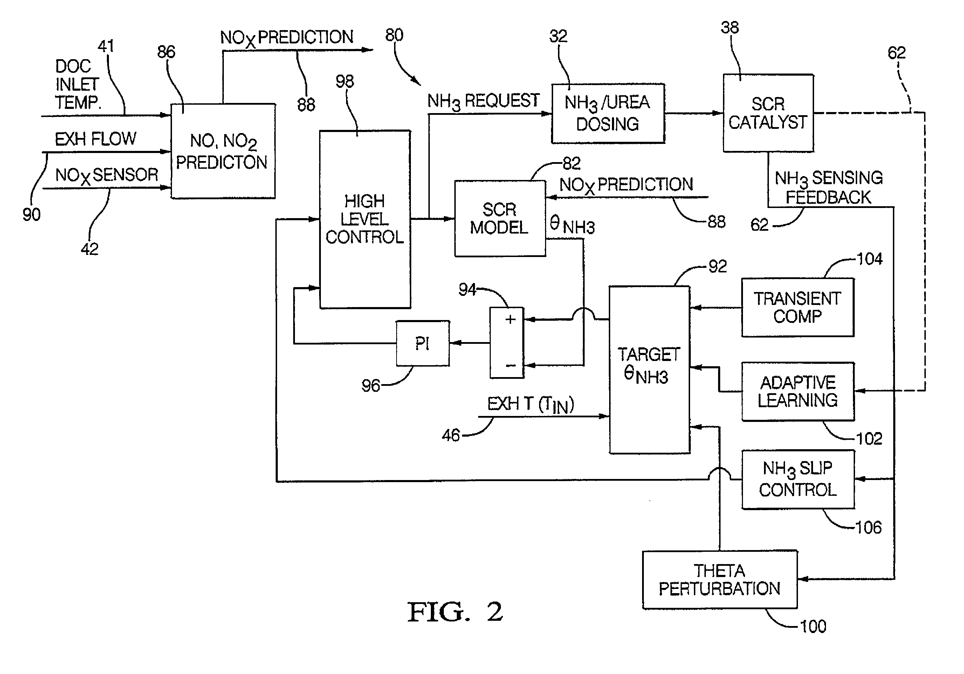

Figure 2 is a block diagram showing an overview of the dosing control 80 of Figure 1. The basic strategy is to control the dosing rate (*e.g.*, urea-water solution) so as to ensure that the there is adequate ammonia stored in the SCR catalyst 38 to achieve (i) a high NOx conversion rate (*i.e.*, conversion of NOx into $N_2$ and $H_2O$), with (ii) a low occurrence or no occurrence at all of ammonia ($NH_3$) slips exceeding predetermined maximum thresholds.

Overall, the dosing control 80 is configured to generate an $NH_3$ Request, which is communicated to the dosing unit 36 (*i.e.*, shown as the "$NH_3$/Urea Dosing"). In the illustrative embodiment, the $NH_3$ Request is indicative of the mass flow rate at which the dosing subsystem 32 is to introduce the urea-water solution into the exhaust gas stream. The control variable used in implementing the dosing control strategy is a so-called ammonia surface coverage parameter theta ($\theta_{NH3}$), which corresponds to the $NH_3$ surface storage fraction associated with the SCR catalyst 38. In other words, the ammonia surface coverage parameter theta ($\theta_{NH3}$) indicates the amount of ammonia-$NH_3$ stored in the SCR catalyst 38. One aspect of the operation of the dosing control 80 involves an SCR model 82.

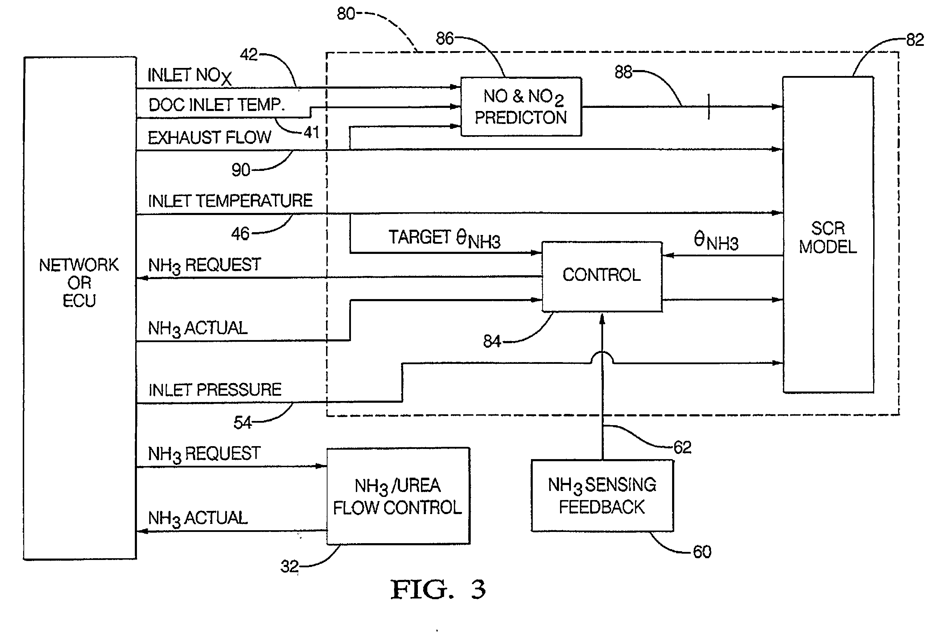

Figure 3 is a signal flow mechanization schematic showing inputs and outputs of the SCR model 82. The SCR model 82 is a chemistry-based SCR model and is shown with a theta control block 84, and a "NO and $NO_2$" predictor block 86. The SCR model 82 is configured to model the physical SCR catalyst 38 and compute real time values for the ammonia surface coverage parameter theta ($\theta_{NH3}$). The theta control block 84 is configured to compare the computed theta ($\theta_{NH3}$) against a target value for theta ("Target $\theta_{NH3}$"), which results in a theta error. The theta control block 84 is configured to use a control strategy (*e.g.*, a proportional-integral (PI) control algorithm) to adjust the requested $NH_3$ dosing rate ("$NH_3$ Request") to reduce the theta error. The theta control block 84 also employs closed-loop feedback, being responsive to ammonia sensing feedback by way of the ammonia sensor 60. The theta control block 84 may use $NH_3$ feedback generally to adapt target theta values to account for catalyst degradation, urea injection malfunction or dosing fluid concentration variation that may be encountered during real-world use. As will be described, the $NH_3$ sensing feedback is also used for various control and diagnostic improvements. The predictor block 86 receives the DOC inlet temperature signal 41 ($T_{DOC-IN}$), the NOx sensor signal 42 and the exhaust flow signal 90 as inputs and is configured to produce data 88 indicative of the respective NO and $NO_2$ concentration levels (engine out) produced by the engine 10. The predictor block 86 may comprise a look-up table (LUT) containing NO and $NO_2$ data experimentally measured from the engine 10.

The SCR model 82 may be configured to have access to a plurality of signals/parameters as needed to execute the predetermined calculations needed to model the catalyst 38. In the illustrative embodiment, this access to sensor outputs and other data sources may be implemented over a vehicle network (not shown), but which may be a controller area network (CAN) for certain vehicle embodiments. Alternatively, access to certain information may be direct to the extent that the dosing control 80 is integrated with the engine control function in the ECU 16. It should be understood that other variations are possible.

The SCR model 82 may comprise conventional models known in the art for modeling an SCR catalyst. In one embodiment, the SCR model 82 is responsive to a number of inputs, including: (i) predicted NO and $NO_2$ levels 88; (ii) an inlet NOx amount, which may be derived from the NOx indicative signal 42 (best shown in Figure 1); (iii) an exhaust mass air flow (MAF) amount 90, which may be either a measured value or a value computed by the ECU 16 and shown as exhaust MAF parameter 20 in Figure 1; (iv) an SCR inlet temperature, which may be derived from the first temperature signal 46 ($T_{IN}$); (v) an SCR inlet pressure, which may be derived from the first pressure signal 54 ($P_{IN}$); and (vi) the actual amount of reductant (*e.g.*, $NH_3$, urea-water solution shown as "$NH_3$ Actual" in Figure 2) introduced by the dosing subsystem 32. The actual $NH_3$ amount helps ensure that the model provides accurate tracking of the reductant dosing. In one embodiment, values for theta ($\theta_{NH3}$) are updated at a frequency of 10 Hz, although it should be understood this rate is exemplary only. There are a plurality of modeling approaches known in the art for developing values for a surface coverage parameter theta ($\theta_{NH3}$), for example as seen by reference to the article by M. Shost et. al, "Monitoring, Feedback and Control of Urea SCR Dosing Systems for NOx Reduction: Utilizing an Embedded Model and Ammonia Sensing", SAE Technical Paper Series 2008-01-1325.

Referring again to Figure 2, the dosing control 80 includes additional blocks. In particular, a target theta parameter (Target $\theta_{NH3}$) block 92 is shown, which is configured to provide a value for the target theta parameter (Target $\theta_{NH3}$) preferably as function of temperature (*e.g.*, exhaust gas temperature, such as the SCR inlet temperature $T_{IN}$). The target $\theta_{NH3}$, which is determined as a function of the SCR catalyst inlet temperature $T_{IN}$, is conventionally set-up based on the following considerations: (1) desire to achieve a maximum possible NOx conversion efficiency with acceptable $NH_3$ slip levels (30 ppm peak, 10 ppm average) for a given emission test cycle, and (2) recognition that limits must be set for the theta values at low temperatures to prevent potential high $NH_3$ slips upon sudden temperature ramp up in off-cycle tests. In other words, in a pure ammonia storage control mode *(i.e.,* theta parameter control), different emission cycles may call for different theta values in order to achieve the best NOx conversion within the confines of the applicable $NH_3$ slip limits.

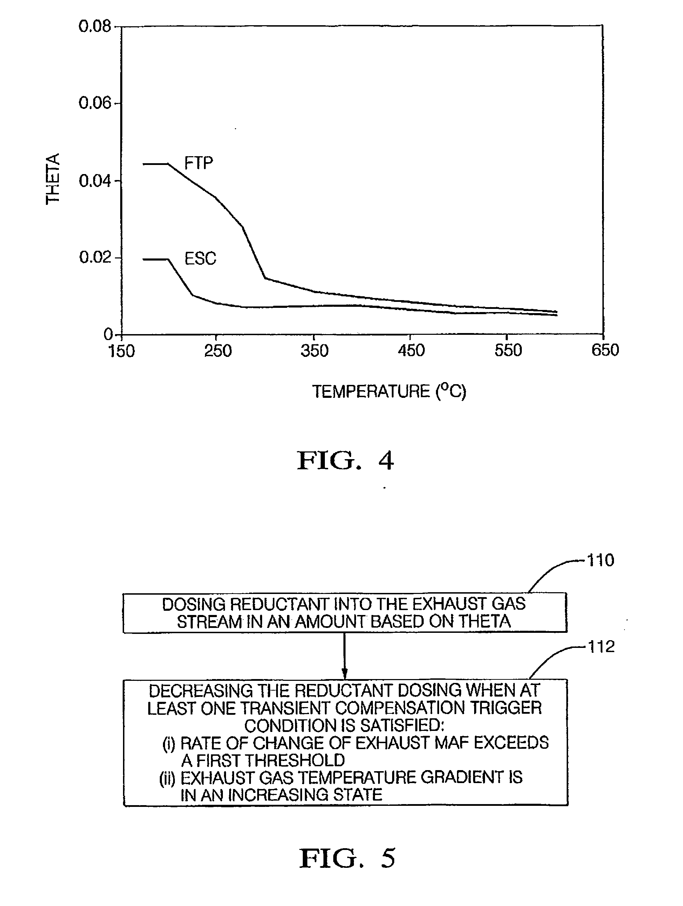

Figure 4 is a diagram showing exemplary target theta $\theta_{NH3}$ curves determined for both the Euro Stationary Cycle (ESC) and the Federal Test Procedure (FTP) emission cycles using Cu-zeolite catalysts. As a practical matter, however, only one curve can be used in real world situations. The values from one of the target theta curves may be stored in a look-up table (LUT) or the like for run-time use by the theta control block 84 of the dosing control 80. Such values may take the form of (temperature, theta value) data pairs.

As shown in Figure 2, the theta control 84 further includes a comparator 94 (*e.g.*, a summer, or equivalent) configured to generate the theta error signal described above, indicative of the difference between the target theta (Target $\theta_{NH3}$) and the computed theta ($\theta_{NH3}$) from the SCR model. A PI control 96 is configured to produce an output signal configured to reduce the magnitude of the theta error. A high level control block 98 is responsive to various inputs to produce the $NH_3$ Request signal, which is communicated to the dosing subsystem 32.

Figure 2 also shows, in block form, a number of additional control and diagnostic features. These additional control and diagnostic features may be arranged to work together in some embodiments to achieve maximum NOx conversion while maintaining acceptable $NH_3$ slip levels under various driving conditions (*i.e.*, in vehicle applications). The dosing control 80 thus includes a number of functional blocks to implement these features: a theta perturbation diagnostic block 100, an adaptive learning diagnostic block 102, a transient compensation control block 104 and an $NH_3$ slip control block 106.

The theta perturbation diagnostic block 100 is configured to perturb the target theta parameter in accordance with a small diagnostic function and to measure the resulting response to determine the state of health of one or more components of the exhaust treatment system 14. The adaptive learning diagnostic block 102 includes a diagnostic feature that monitors how much adaptation has been applied in adjusting the target theta parameter and generates an error when the level of adaptation exceeds predetermined upper and lower limits. The logic in operation is that at some level, the ability to adapt target theta values to overcome errors (*e.g.*, reagent misdosing, reagent quality problems, SCR catalyst degradation) will reach its control limit for maintaining emissions. When this control limit is exceeded, the diagnostic generates an error. These features are described in greater detail in the co-pending patent application entitled "DIAGNOSTIC METHODS FOR SELECTIVE CATALYTIC REDUCTION (SCR) EXHAUST TREATMENT SYSTEM", (Attorney Docket No. DP-318283), filed on even date herewith, owned by the common assignee of the present invention, the disclosure of which is hereby incorporated by reference in its entirety.

As described above, it has been determined that in pure ammonia storage control mode, different emission cycles (*e.g.*, ESC, FTP) may call for different target theta values (target $\theta_{NH3}$) in order to achieve the best NOx conversion within NH$_3$ slip constraints. Therefore, due to the transient nature of such emission test cycles, the target theta curve (target $\theta_{NH3}$) has to be set conservatively low in order to prevent NH$_3$ slips. Ammonia slip is especially problematic when the temperature of the catalyst is increasing. The invention provides a robust control approach with a pair of improvements that overcome the above-described theta control limitations, each of which help mitigate a potential high NH$_3$ slip in the event of an increase in the exhaust gas temperature.

The first of these improvements involve dosing reductions upon detection of certain exhaust transient conditions ("Transient Compensation"). One transient condition includes a sudden increase in the exhaust gas mass air flow, which portends a like increase in the exhaust gas temperature, which allows extra time for the dosing control to adjust NH$_3$ dosing before possible NH$_3$ slips can occur. Another transient condition includes an increasing exhaust temperature gradient.

The second of these improvements involve shutting-off dosing altogether when certain exhaust conditions are recognized by the dosing control ("NH$_3$ slip control"). These improvements will each be described in turn.

*Transient Compensation.* The dynamics of NH$_3$ adsorption and NOx conversion in the SCR catalyst are governed by several chemical reactions. Additionally, the desorption of NH$_3$ into the exhaust is similarly governed. However, perhaps the most dominating effect on the availability of NH$_3$ to desorb from the SCR catalyst into the exhaust stream is the local temperature in the SCR catalyst itself. This aspect of the invention provides a mechanism to estimate the potential increase in the exhaust gas temperature, which may lead to conditions favorable for excess ammonia to exit the SCR catalyst. Generally, to mitigate such an occurrence, a dosing rate reduction can be used to reduce the overall availability of ammonia, and thus minimize an excess amount of ammonia that may be stored in the catalyst prior to the anticipated rise in temperature.

Figure 5 is a flowchart showing the basic steps involved in carrying out a method for exhaust transient detection and dosing rate compensation. The method begins in step 110.

In step 110, the method involves dosing a reductant (*e.g.*, NH$_3$ or aqueous urea) into the exhaust gas stream in an amount based on the target theta parameter (target $\theta_{NH3}$). This is a baseline amount for purposes of the method. As a consequence of this feature, however, it should be pointed out that a more aggressive dosing may be employed, especially for lower temperatures to improve NOx conversion efficiency, since the risk of an uncontrolled NH$_3$ slip that would conventionally be present is now reduced due to the detection and compensation aspects of the method. The method proceeds to step 112.

In step 112, the method involves decreasing the reductant dosing when at least one of multiple exhaust transient compensation trigger conditions are satisfied. The first trigger condition is satisfied when a rate of change of the mass air flow (*i.e.*, exhaust gas mass air flow preferably) exceeds a predetermined threshold. A second trigger condition is satisfied when an exhaust gas temperature gradient is in an increasing state *(i.e.,* in contrast to a decreasing state or to a steady-state).

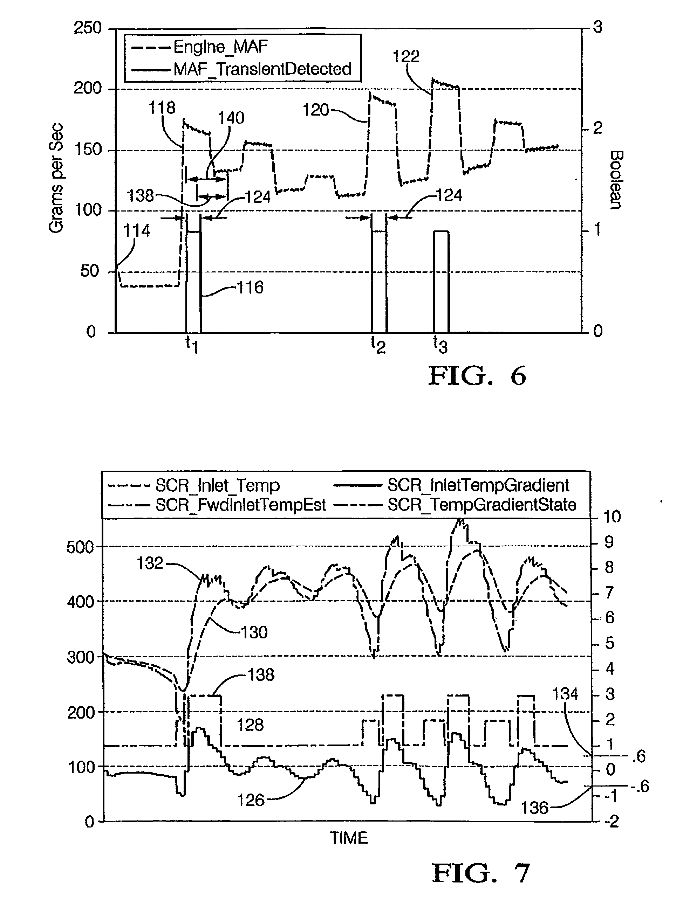

Figure 6 is a timing diagram for an ESC driving cycle showing an exhaust mass air flow trace 114 and a trace 116 of a logic variable. The state of the logic variable indicates whether the mass air flow transient condition has been satisfied (*i.e.,* logical "1") or not satisfied (*i.e.*, logical "0"). Determining whether the mass air flow condition has been satisfied may first involve monitoring the engine air flow conditions. Preferably, the method involves monitoring the engine exhaust mass air flow. In many conventional engine control units, the engine exhaust mass air flow parameter is computed and would be available.

The next step involves determining whether a rate of change of the monitored engine mass air flow exceeds a predetermined threshold. The numerical value for the predetermined threshold may vary depending on the overall dosing control configuration, the SCR catalyst characteristics, and the like. For example, the value of the threshold, which effectively corresponds to the severity of the mass air flow transient, may be determined empirically to determine at what severity the mass air flow transients cause unacceptable NH$_3$ slips for the particular target theta curve in use. In one embodiment, and for exemplary purposes only, the predetermined threshold for the mass air flow rate of change was about 80 g/sec (*i.e.,* $\Delta$80 g/sec). As shown in Figure 6, the mass air flow transients along edges 118, 120 and 122, corresponding roughly to times $t_1$, $t_2$ and $t_3$, exceed the threshold and thus cause the logic variable (trace 116) to transition from a logic "0" to a logic "1". In an alternative embodiment, to combat false triggering due to noise, the method may additionally involve a confirmatory check of the mass air flow level, which is taken at a predetermined amount of time (*e.g.*, 5-10 seconds) after the initial detection, to ensure that the large mass air flow transient was indeed true and not the result of noise. In the illustrated embodiment, once the mass air flow transient condition has been detected, the method is configured to sustain or hold this logic state for a predetermined amount of time, which is shown as time interval 124. In one embodiment, the time interval 124 may be in a range of between about 20 and 40 seconds. The time interval 124 is also selectable and may be determined empirically for any particular exhaust treatment system.

Once detected, this logic variable can be considered a state variable, and this state is then passed on (or is otherwise available) to the dosing control 80, which uses the boolean state of this logic variable to adjust (reduce) dosing. This is shown in Figure 3 where the output of the transient compensation block 104 is provided to the target theta determining block 92. The dosing control 80, through block 92, may be configured to reduce the dosing by adjusting downward the target theta values, for example, by a predetermined amount when the state of the logic variable (trace 116) is a Boolean "1" (*e.g.*, up to a maximum of 25% reduction using the target theta as a baseline). For example, the de-rated target theta values in Table 1 below, albeit in the context for the temperature gradient transient, may also be applicable to the exhaust mass air flow transient compensation.

Figure 7 is a timing diagram for an ESC driving cycle showing an exhaust gas temperature gradient (trace 126) as well as a state or logic variable (trace 128). The value of the logic variable indicates the what state the exhaust temperature gradient is in (*i.e.*, decreasing, steady-state, or increasing). Figure 7 also shows a measured exhaust gas temperature (trace 130-as measured at the SCR inlet by temperature sensor 44 ($T_{IN}$)) as well as a forward exhaust gas temperature estimate as shown in trace 132. The exhaust temperature gradient (trace 126) may be computed at predetermined intervals based on the current (measured) SCR inlet temperature, as compared to the SCR inlet temperature that was measured a predetermined time ago (*e.g.*, every 15 seconds). From this calculation, an updated exhaust temperature gradient value is produced. The time-series of these computed gradient values collectively define the trace 126. Finally, to determine the state of the temperature gradient (*i.e.*, decreasing, steady-state, increasing) at any particular point in time, the value of the gradient is compared against upper and lower gradient thresholds, which are shown in Figure 7 by reference numerals 134, 136.

In one embodiment, the upper and lower thresholds 134, 136 may have values between about (0.50 to 0.60 °C/sec) and (-0.5 to -0.60 °C/sec), respectively. These values allow for a small amount of variation in the gradient and still be considered "steady-state". The temperature gradient (trace 126), when compared against the thresholds, determine the appropriate gradient state for the state variable 128, namely, "increasing" (state variable 128 is equal to 3), "steady-state" (state variable 128 is equal to 1) or "decreasing" (state variable 128 is equal to 2). The trace of the state variable 128, particularly what value it assumes at any point in time, indicates directly the exhaust temperature gradient state. For example, during the time interval 138, the temperature gradient is in the "increasing" state since the value of the state variable 128 during that time is equal to three (3). The exhaust temperature gradient state is passed to the dosing control 80 (specifically the block 92 in Figure 3), which may use it in determining whether to reduce the $NH_3$ dosing rate, and if so, by how much (more on this below). Otherwise, if the gradient state is either "decreasing" or "steady-state", the dosing control will generally not make any dosing reductions.

Figure 7 also shows the variations in time of a so-called forward exhaust temperature estimate, which is reproduced as trace 132. For comparison, the measured (actual) exhaust temperature is also plotted, and is shown as trace 130. The forward temperature estimate may also be used in the dosing control (more on this below as well). To provide the forward temperature estimate, a forward exhaust temperature estimator block (not shown) may be provided, which may be responsive to a number of available parameter values to calculate or estimate the exhaust temperature value at a future time (forward-looking), as set forth in equation (1) below:

$$(1) \quad T_{FWD\_EST} = T_{PRESENT} + GRADIENT * t_{FWD\_INTERVAL}.$$

where $T_{FWD\_EST}$ is the forward estimated exhaust temperature at a future time;

$T_{PRESENT}$ is the current (measured) exhaust temperature;

GRADIENT is the current (computed) exhaust temperature gradient;

$t_{FWD\_INTERVAL}$ is the amount of time into the future at which the exhaust temperature estimate is to be made.

The dosing control may be configured to control a reduction in the $NH_3$ dosing by using the state of the temperature gradient, the forward exhaust temperature estimate or the combination of both.

In a first embodiment, the dosing control may be configured to apply a multiplier (*e.g.*, less than one) to the entire target theta parameter curve/table when the state of the temperature gradient is "increasing". This scaling downward will reduce the $NH_3$ dosing. In a further variation, the multiplier value may vary with respect to the current exhaust temperature, as shown in exemplary fashion in Table 1 below. The values in Table 1 may be implemented in a look-up table (LUT) or the like, as known in the art. It should be further understood that the particular values contained in the table are calibratable, meaning that such values can be adjusted for any particular application to suit the specific configuration, SCR catalyst characteristics, the tradeoffs between the desired levels of NOx conversion versus the severity of $NH_3$ slips, and the like. Moreover, in one variation, an advantage to using a LUT like that in Table 1 for defining the amount of dosing reduction is that the same LUT can be also be used for dosing reduction for detected exhaust mass air flow transients, as described above. It should be understood that implementation variations, such as but not limited to the number of table entries (*i.e.* the granularity of the table), whether interpolation should be used, or like considerations are within the spirit and scope of the invention.

Table 1. Theta Multiplier To Reduce Reductant Dosing

| TEMPERATURE (°C) | MULTIPLIER |
|---|---|
| 200 | 1 |
| 225 | 1 |
| 250 | 1 |
| 275 | 0.83 |
| 300 | 0.75 |
| 350 | 0.75 |
| 400 | 0.75 |
| 450 | 0.83 |
| 500 | 1 |
| 550 | 1 |
| 600 | 1 |
| | |

In a second embodiment, the dosing control may be configured to use the forward (look-ahead) estimated exhaust temperature, calculated for a predetermined time in the future (*e.g.*, sixty seconds). In particular, the dosing control may be configured so that when the gradient state is "increasing (value of three), the forward temperature estimate is used to select the target theta (target $\theta_{NH3}$). Given that the target theta values (*i.e.*, see the curves in Figure 4) are inversely proportional to temperature, the step of selecting the target theta (target $\theta_{NH3}$) based on the expected increase in exhaust temperature will result in a reduced value for the target theta (target $\theta_{NH3}$). This will immediately begin reducing the $NH_3$ dosing rate by virtue of the lower value target theta. As with the LUT referred to in the dosing control approach above, the target theta curve may likewise be calibratable, and this approach likewise has the benefit that it may also be used when exhaust mass air flow transients have been detected. Additionally, this second embodiment has been observed in some circumstances to provide for a smoother transition to the correct (*i.e.*, stable) target theta value at the end of transient compensation. This is believed to be due to the fact that as the temperature gradient gets smaller, the future temperature and current (measured) temperature tend to merge.

Referring to Figures 6 and 7, both transient compensation features, although independent of each other, may be used simultaneously, and in many instances, both features may be active at the same time (*i.e.*, both can indicate to the dosing control that reduction in the dosing rate should be considered). For example, in Figure 6, the time interval 138 (*i.e.*, gradient state is "increasing") has been superimposed and in timed relationship with the MAF transient "detect and hold" interval 124. Note, in some instances, there will be some measure of overlap. In addition, time interval 140 is the composite time interval over which the dosing control is making adjustments (reductions) based on the detection of exhaust transient conditions.

In sum, it bears emphasizing that the dosing reduction that is implemented when transient conditions are detected are not dependent on $NH_3$ sensor feedback, but rather are prospective in nature. In other words, the benefit of transient compensation is to allow the adjustment of the $NH_3$ dosing rate in the event of a likely increase in the exhaust temperature. In ammonia storage control mode, transient compensation features enables the setup of higher target theta values especially at low temperatures for improved NOx conversion efficiency while at the same time reducing the risk of an unacceptably high $NH_3$ slip.

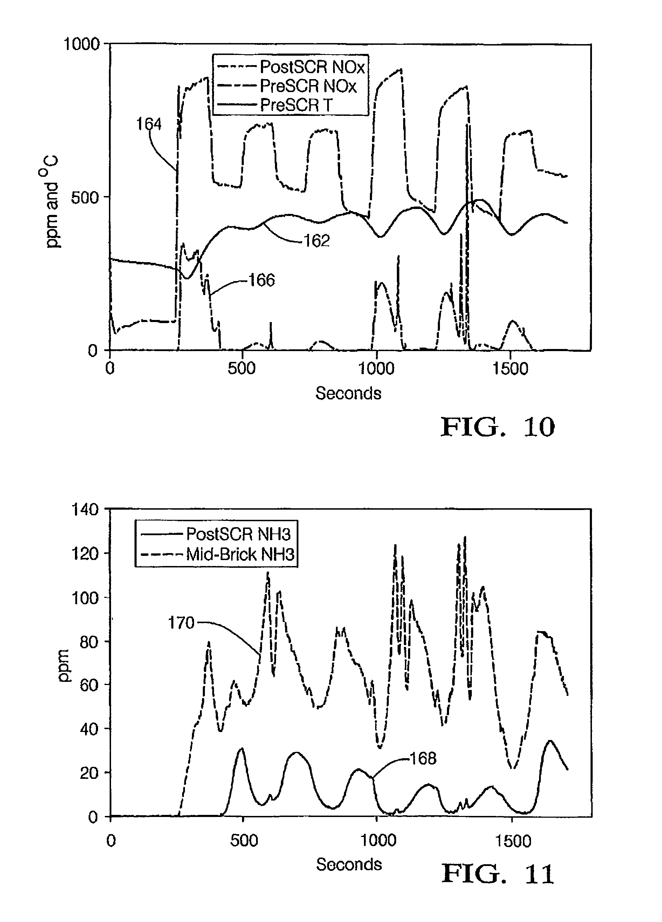

*$NH_3$ Slip Control on Recognition of Certain Exhaust Conditions.* This aspect of the invention addresses the $NH_3$ slip risk during SCR catalyst operation while maximizing NOx conversion efficiency by using a mid-brick positioned ammonia sensor to provide feedback for detecting the slip risk. As described above, the ammonia sensor being located at a mid-brick position of the SCR catalyst provides greater sensitivity to $NH_3$ dosing variation because of reduced $NH_3$ storage capacity of the front (*i.e.*, forward or upstream) brick (*e.g.*, see Figure 11 below). Therefore, the more rapid response to dosing errors, by virtue of the mid-brick detection, can be utilized to control ammonia slip with the help of the back (*i.e.*, rear or downstream) brick. This feature of the invention utilizes this quick response in combination with the recognition of certain exhaust conditions to activate a slip trip mode, which calls for, in one embodiment, complete dosing shut-off. This feature provides even greater flexibility in ammonia slip control while maximizing NOx removal.

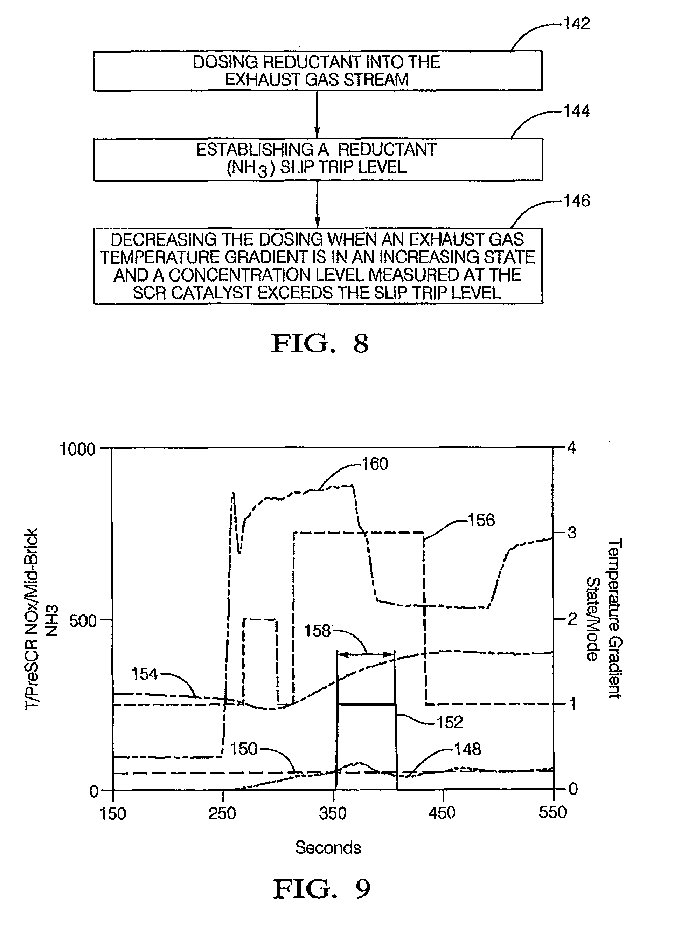

Figure 8 is a flowchart of a method of $NH_3$ slip control while Figure 9 is a timing diagram showing the first 550 seconds of an exemplary ESC driving cycle, illustrating the relevant signals. In particular, Figure 9 shows the temperature at the SCR inlet increase from less than 250°C to 400°C between about time $t_{290\_seconds}$ and time $t_{450\_seconds}$, while the engine out NOx (trace 160) starts to decrease after time $t_{370-seconds}$. Since the engine out NOx drops significantly, the ammonia stored on the SCR catalyst at low temperatures would otherwise slip without the slip trip intervention of this feature of the invention. The method for begins in step 142.

In step 142, the method involves dosing $NH_3$ (*i.e.*, a reductant, generally, such as urea-water solution of Figure 1) into the exhaust stream in an amount based on target theta (target $\theta_{NH3}$). The target theta parameter has been described in detail above. Generally speaking, this feature may remain inactive until a predetermined, minimum temperature has been reached, which may range between about 250 to 300 °C may further be between about 275 to 300 °C and may be about 300 °C. It should be understood that the compromises of a fixed target theta curve may manifest themselves more acutely as the catalyst temperature increases rapidly, particularly the low end of the overall target theta table where ammonia storage is high but where there is more risk of $NH_3$ slip. Therefore, it should be understood that while the $NH_3$ slip control feature will be most useful in those certain temperature ranges, the invention is not so limited. In addition, it bears emphasizing that the ammonia concentration sensor 60 is preferably located for this method at a mid-brick position. The sensor 60 produces an ammonia concentration signal 62 that is indicative of the ammonia concentration level. Figure 9 shows the ammonia concentration level as trace 148. The method proceeds to step 144.

In step 144, an $NH_3$ slip trip level is established (*e.g.*, 50 ppm). In one embodiment, the slip trip level may be adjustable and selected based on the exhaust temperature (*i.e.*, the SCR inlet temperature ($T_{IN}$)). Figure 9 shows an exemplary slip trip level as trace 150. The method proceeds to step 146.

In step 146, the method is configured to decrease, or, in a preferred embodiment, entirely shut off dosing when certain exhaust conditions for activating the slip trip mode have been satisfied. The first condition to be satisfied is when the exhaust gas temperature gradient is in an "increasing" state. The method for making this determination has been described above. Note, Figure 9 shows the exhaust temperature as trace 154 and the corresponding state of the exhaust temperature gradient as trace 156. Trace (state variable) 156 may take values of either "1" (steady-state), "2" (decreasing) or "3" (increasing). The second condition to be satisfied is when the $NH_3$ concentration level (trace 148) exceeds the $NH_3$ slip trip level 150. Figure 9 shows the $NH_3$ concentration level (trace 148) exceeding the slip trip level (trace 150) during the time interval 158. Accordingly, since the first condition and the second condition are both satisfied during time interval 158, the slip trip mode is activated, which is represented by trace 152 (logic "1"). Note, the slip trip mode 152 can assume a logic value of "0" (inactive) or "1" (active).

When the slip trip mode is active, as per method step 146, the dosing control is configured to preferably shut-off $NH_3$ dosing. As shown in Figure 3, the output of the $NH_3$ slip control block 106, namely the state variable (trace 152) indicating whether the slip trip mode is active or inactive, is provided directly to the high-level control 98. The dosing shut-off imposed by high-level control 98 continues for as long as the requisite conditions remain satisfied. This feature prevents potentially high slips of ammonia, especially when the target ammonia storage (coverage) parameter theta (target $\theta_{NH3}$) is set to relatively high values especially for low temperatures. The significant benefit is that it allows for high ammonia storage (*i.e.*, high target $\theta_{NH3}$) at low temperatures (*e.g.*, below 300 °C) for maximal NOx conversion under certain driving conditions while at the same time having significantly less risk of unacceptably high $NH_3$ slips when the exhaust temperature increases.

Figures 10 and 11 show the data for an entire ESC driving cycle, where NOx conversion is about 90.6%, the peak $NH_3$ slip was about 35 ppm and the average $NH_3$ slip was about 9 ppm.

Figure 10 shows the pre-SCR catalyst inlet temperature (TIN) as trace 162, a pre-SCR catalyst NOx concentration level as trace 164 and a post-SCR catalyst NOx concentration level as trace 166, all for the ESC driving cycle. Note that the NOx conversion (*i.e.*, removal), as represented by the difference between traces 164 and 166, was about 90.6%.

Figure 11 shows the post-SCR catalyst $NH_3$ concentration level as trace 168 and the mid-brick $NH_3$ concentration level as trace 170, all for the ESC driving cycle. Note that the peak $NH_3$ slip was about 34 ppm while the average $NH_3$ slip was about 9 ppm.

While particular embodiments of the invention have been shown and described, numerous variations and alternate embodiments will occur to those skilled in the art. Accordingly, it is intended that the invention be limited only in terms of the appended claims.

**Claims**

1. A method of operating the treatment system of an internal combustion engine producing a stream of an exhaust gas (12) to an exhaust treatment system having a selective catalytic reduction (SCR) catalyst (38), , the method comprising the steps of:

dosing (110) reductant into the exhaust gas stream in an amount based on at least a reductant surface coverage parameter theta ($\theta$) of the SCR;
decreasing (112) the reductant dosing when one of a plurality of transient compensation trigger conditions are satisfied, wherein the trigger conditions include a first condition when a rate of change in a mass air flow (MAF) level exceeds a first predetermined threshold and a second condition when an exhaust gas temperature gradient is in an increasing state,
detecting the first condition at a first time; and
sustaining the first condition for a predetermined time after the first time.

2. The method of claim 1 wherein said reductant is selected from the group comprising ammonia ($NH_3$) and urea, said dosing (110) step including the substep of mixing the reductant with the exhaust gas upstream of the SCR catalyst (38).

3. The method of claim 1 wherein said dosing step (110) includes the substeps of:

measuring an exhaust gas temperature;
determining a value for the surface coverage parameter theta ($\theta$) based on measured exhaust gas temperature and predetermined data;
and wherein said decreasing step includes adjusting the determined theta ($\theta$) parameter value downwards by a predetermined amount.

4. The method of claim 3 further including the step of:

increasing the adjusted theta ($\theta$) parameter value when none of the transient compensation triggers conditions are satisfied.

5. The method of claim 4 further including the step of:

repeating said increasing step until the adjusted theta ($\theta$) parameter value equals the theta ($\theta$) parameter value determined based on the measured exhaust gas temperature and the predetermined data.

6. The method of claim 1 wherein said detection step includes the substeps of:

determining, at an initial time, that a rate of change of the MAF level exceeds the first predetermined threshold; and deeming the first condition detected when the rate of change of the MAF level continues to exceed the first predetermined threshold as assessed at a confirmation time interval after the initial time.

7. The method of claim 1 further including the steps of:

providing an exhaust gas temperature gradient signal;
establishing predetermined upper and lower state limits;
determining the state of the exhaust gas temperature gradient as (i) increasing when the exhaust gas temperature gradient signal is greater than the upper state limit; (ii) steady state when the exhaust gas temperature gradient signal is between the upper and lower state limits; and (iii) decreasing when the exhaust gas temperature gradient signal is lower than the lower state limit; and deeming the second condition as detected when the exhaust gas temperature gradient is in the increasing state.

**Patentansprüche**

1. Verfahren zum Betreiben des Behandlungssystems eines Verbrennungsmotors, der einen Abgasstrom (12) zu einem Abgasbehandlungssystem erzeugt, mit einem "selektive katalytische Reduktion (SCR - selective catalytic reduction)"-Katalysator (38), wobei das Verfahren die Schritte aufweist:

Dosieren (110) von Reduktionsmittel in den Abgasstrom in einer Menge basierend auf zumindest einem Reduktionsmittel-Oberfläche-Abdeckungs-Parameter Theta ($\theta$) der SCR;

Verringern (112) der Dosierung des Reduktionsmittels, wenn eine einer Vielzahl von transienten Kompensations-Auslöse-Bedingungen erfüllt ist, wobei die Auslöse-Bedingungen eine erste Bedingung umfassen, wenn eine Änderungsrate in einem Luftmassenstrom(MAF - mass air flow)-Pegel eine erste vorgegebene Schwelle übersteigt, und eine zweite Bedingung, wenn ein Abgastemperatur-Gradient in einem zunehmenden Zustand ist, Erfassen der ersten Bedingung an einem ersten Zeitpunkt; und
Erhalten der ersten Bedingung für eine vorgegebene Zeitdauer nach dem ersten Zeitpunkt.

2. Das Verfahren gemäß Anspruch 1, wobei das Reduktionsmittel aus der Gruppe ausgewählt wird, die Ammoniak (NH$_3$) und Harnstoff aufweist, wobei der Dosierungsschritt (110) den Teilschritt eines Mischens des Reduktionsmittels mit dem Abgas stromaufwärts des SCR-Katalysators (38) umfasst.

3. Das Verfahren gemäß Anspruch 1, wobei der Dosierungsschritt (110) die Teilschritte umfasst:

Messen einer Abgastemperatur;
Bestimmen eines Werts für den Oberfläche-Abdeckungs-Parameter Theta ($\theta$) basierend auf einer gemessenen Abgastemperatur und vorgegebenen Daten;
und wobei der Schritt des Verringerns umfasst ein Anpassen des bestimmten Parameterwerts Theta ($\theta$) stromabwärts um einen vorgegebenen Betrag.

4. Das Verfahren gemäß Anspruch 3, das weiter den Schritt umfasst:

Erhöhen des angepassten Parameterwerts Theta ($\theta$), wenn keine der transienten Kompensations-Auslöse-Bedingungen erfüllt sind.

5. Das Verfahren gemäß Anspruch 4, das weiter den Schritt umfasst:

Wiederholen des Schritts des Erhöhens, bis der angepasste Parameterwert Theta ($\theta$) gleich dem Parameterwert Theta ($\theta$) ist, der basierend auf der gemessenen Abgastemperatur und den vorgegebenen Daten bestimmt wird.

6. Das Verfahren gemäß Anspruch 1, wobei der Schritt des Erfassens die Teilschritte umfasst:

Bestimmen, an einem anfänglichen Zeitpunkt, dass eine Änderungsrate des MAF-Pegels die erste vorgegebene Schwelle übersteigt; und
Ansehen der ersten Bedingung als erfasst, wenn die Änderungsrate des MAF-Pegels weiter die erste vorgegebene Schwelle übersteigt, wie beurteilt an einem Bestätigungszeitintervall nach dem anfänglichen Zeitpunkt.

7. Das Verfahren gemäß Anspruch 1, das weiter die Schritte umfasst:

Vorsehen eines Abgastemperatur-Gradient-Signals;
Aufstellen von vorgegebenen oberen und unteren Zustandsgrenzen;
Bestimmen des Zustands des Abgastemperatur-Gradients als (i) zunehmend, wenn das Abgastemperatur-Gradient-Signal größer ist als die obere Zustandsgrenze; (ii) stabiler Zustand, wenn das Abgastemperatur-Gradient-Signal zwischen den oberen und unteren Zustandsgrenzen ist; und (iii) abnehmend, wenn das Abgastemperatur-Gradient-Signal niedriger ist als die untere Zustandsgrenze; und Ansehen der zweiten Bedingung als erfasst, wenn der Abgastemperatur-Gradient in dem zunehmenden Zustand ist.

**Revendications**

1. Procédé de fonctionnement du système de traitement d'un moteur à combustion interne qui produit un courant de gaz d'échappement (12) vers un système de traitement de gaz d'échappement ayant un catalyseur (38) de réduction catalytique sélective (SCR), le procédé comprenant les étapes consistant à :

doser (110) un réducteur dans le courant de gaz d'échappement, dans une quantité basée sur au moins un paramètre de couverture surfacique de réducteur thêta ($\theta$) du SCR ;
diminuer (112) le dosage de réducteur lorsqu'une condition parmi une pluralité de conditions de déclenchement de compensation transitoire est satisfaite, lesdites conditions de déclenchement incluant une première condition lorsqu'un taux de changement dans le niveau de débit massique d'air (MAF) excède un premier seuil prédéterminé et une seconde condition lorsqu'un gradient de température des gaz d'échappement est dans un état en augmentation,
détecter la première condition à un premier instant ; et
soutenir la première condition pendant un temps prédéterminé après le premier instant.

2. Procédé selon la revendication 1, dans lequel ledit réducteur est choisi parmi le groupe comprenant ammoniac ($NH_3$) et urée, ladite étape de dosage (110) incluant la sous-étape consistant à mélanger le réducteur avec les gaz d'échappement en amont du catalyseur SCR (38).

3. Procédé selon la revendication 1, dans lequel ladite étape de dosage (110) inclut les sous-étapes consistant à :

mesurer une température des gaz d'échappement ;
déterminer une valeur pour le paramètre de couverture de surface thêta ($\theta$) en se basant sur la température mesurée des gaz d'échappement et sur des données prédéterminées ;
et dans lequel ladite étape de diminution inclut d'ajuster la valeur du paramètre thêta ($\theta$) déterminée vers le bas d'une valeur prédéterminée.

4. Procédé selon la revendication 3, incluant en outre l'étape consistant à :

augmenter la valeur du paramètre thêta ($\theta$) ajusté lorsqu'aucune des conditions de déclenchement de compensation transitoire n'est satisfaite.

5. Procédé selon la revendication 4, incluant en outre l'étape consistant à :

répéter ladite étape d'augmentation jusqu'à ce que la valeur du paramètre thêta ($\theta$) ajustée soit égale à la valeur du paramètre thêta ($\theta$) déterminée en se basant sur la température mesurée des gaz d'échappement et sur les données prédéterminées.

6. Procédé selon la revendication 1, dans lequel ladite étape de détection inclut les sous-étapes consistant à :

déterminer, à un instant initial, qu'un taux de changement du niveau de MAF excède le premier seuil prédéterminé ; et
estimer que la première condition est détectée quand le taux de changement du niveau de MAF continue à excéder le premier seuil prédéterminé, comme vérifié à un intervalle temporel de confirmation après l'instant initial.

7. Procédé selon la revendication 1, incluant en outre les étapes consistant à :

fournir un signal de gradient de température de gaz d'échappement ;
établir des limites prédéterminées d'état supérieure et inférieure ;
déterminer l'état du gradient de température des gaz d'échappement comme (i) en augmentation quand le signal du gradient de température des gaz d'échappement est supérieur à la limite d'état supérieure ; (ii) en état stable quand le signal du gradient de température des gaz d'échappement est entre les limites d'état supérieure et inférieure ; et (iii) en diminution quand le signal du gradient de température des gaz d'échappement est inférieur à la limite d'état inférieure ; et estimer que la seconde condition est détectée quand le gradient de température des gaz d'échappement est dans l'état en augmentation.

FIG. 1

SCR CATALYST — 38

NH₃ SENSING FEEDBACK — 62

NH₃/UREA DOSING — 32

NH₃ REQUEST

NO$_X$ PREDICTION — 82

SCR MODEL

$\theta_{NH3}$

TRANSIENT COMP — 104

ADAPTIVE LEARNING — 102

NH₃ SLIP CONTROL — 106

THETA PERTURBATION — 100

TARGET $\theta_{NH3}$ — 92

+ − 94

PI — 96

EXH T (T$_{IN}$) — 46

HIGH LEVEL CONTROL — 98

NO$_X$ PREDICTION — 88

80

NO, NO₂ PREDICTON — 86

DOC INLET TEMP. — 41

EXH FLOW

NO$_X$ SENSOR — 42

90

FIG. 2

FIG. 3

EP 2 317 090 B1

FIG. 4

DOSING REDUCTANT INTO THE EXHAUST GAS
STREAM IN AN AMOUNT BASED ON THETA ⟶ 110

DECREASING THE REDUCTANT DOSING WHEN AT
LEAST ONE TRANSIENT COMPENSATION TRIGGER
CONDITION IS SATISFIED:
(i) RATE OF CHANGE OF EXHAUST MAF EXCEEDS
    A FIRST THRESHOLD
(ii) EXHAUST GAS TEMPERATURE GRADIENT IS
    IN AN INCREASING STATE ⟶ 112

FIG. 5

FIG. 6

FIG. 7

142

DOSING REDUCTANT INTO THE
EXHAUST GAS STREAM

144

ESTABLISHING A REDUCTANT
(NH₃) SLIP TRIP LEVEL

146

DECREASING THE DOSING WHEN AN EXHAUST GAS
TEMPERATURE GRADIENT IS IN AN INCREASING STATE
AND A CONCENTRATION LEVEL MEASURED AT THE
SCR CATALYST EXCEEDS THE SLIP TRIP LEVEL

## FIG. 8

## FIG. 9

**FIG. 10**

**FIG. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20060130461 A
- US 20070271908 A
- US 6576587 B
- US 7240484 B

### Non-patent literature cited in the description

- **M. SHOST.** Monitoring, Feedback and Control of Urea SCR Dosing Systems for NOx Reduction: Utilizing an Embedded Model and Ammonia Sensing. *SAE Technical Paper Series 2008-01-1325,* 2008